# EUROPÄISCHE PATENTSCHRIFT

(11) **EP 1 210 303 B1**
(45) Veröffentlichungstag und Bekanntmachung des Hinweises auf die Patenterteilung: **24.03.2004**
(21) Anmeldenummer: 00951470.4
(22) Anmeldetag: 29.07.2000
(51) Int. Cl.: C04B 41/51

(54) **GLANZEDELMETALLPRÄPARAT FÜR DEN HOCHTEMPERATURBRAND UND SEINE VERWENDUNG ZUR HERSTELLUNG VON GLANZEDELMETALLDEKOREN**
BRIGHT PRECIOUS METAL PREPARATION FOR BAKING IN AT HIGH TEMPERATURES AND USE THEREOF FOR PRODUCING DECORATIVE BRIGHT PRECIOUS METAL ELEMENTS
PREPARATION DE METAL PRECIEUX SOLUBLE DESTINEE A UN SECHAGE A HAUTE TEMPERATURE ET SON UTILISATION AUX FINS DE PRODUCTION DE DECORS EN METAUX PRECIEUX SOLUBLES

(30) Priorität: 28.08.1999 DE 19941020
(43) Veröffentlichungstag der Anmeldung: 05.06.2002
(73) Patentinhaber: Degussa AG, 40474 Düsseldorf (DE)
(72) Erfinder: POTH, Lutz, D-64380 Rossdorf (DE); LANG, Peter, D-63589 Linsengericht (DE); GROH, Hans, D-61200 Wölfersheim (DE)
(74) Vertreter: Reinhardt, Markus, Dipl.-Ing.
(86) Internationale Anmeldenummer: PCT/EP2000/007351
(87) Internationale Veröffentlichungsnummer: WO 2001/016053

(56) Entgegenhaltungen:
- EP-A- 1 043 294
- DE-A- 19 915 937
- DE-C- 4 122 131
- US-A- 3 216 834
- US-A- 3 718 488

## Beschreibung

Die Erfindung betrifft ein Glanzedelmetallpräparat, insbesondere Glanzgoldpräparat, für den Hochtemperaturbrand, wobei das auf einen silikatischen Gegenstand aufgebrachte Präparat bei 1050 bis 1300 °C, also oberhalb des Schmelzpunktes von Gold, eingebrannt wird. Bei dem entstehenden Dekor handelt es sich um einen glänzenden Edelmetallfilm. Ein weiterer Gegenstand der Erfindung richtet sich auf ein Verfahren zur Herstellung eines Glanzedelmetalldekors, insbesondere Glanzgolddekors, auf einem silikatischen Träger.

Glanzedelmetallpräparate bestehen im wesentlichen aus einer oder mehreren in einem flüssigen Trägermedium löslichen Edelmetallverbindungen und Flussmittelverbindungen. Bei den wichtigsten Edelmetallverbindungen handelt es sich um solche von Gold, weshalb derartige Präparate auch häufig als Glanzgoldpräparate bezeichnet werden. Die Edelmetallverbindungen liegen üblicherweise in Form organischer Verbindungen vor, in welchen das Edelmetall über eine Schwefel- oder Sauerstoffbrücke an ein organisches Gerüst gebunden ist. Da es sich häufig um Stoffgemische handelt, werden diese als Edelmetall-Resinate und Edelmetall-Sulforesinate bezeichnet. Bei den Flussmittelverbindungen handelt es sich insbesondere um Resinate und Sulforesinate von Elementen der dritten bis fünften Hauptgruppe und dritten bis achten Nebengruppe des Periodensystems. Bei den Trägermedien handelt es sich meistens um eine Kombination aus mindestens einem Lösungsmittel und einem Bindemittel. Das flüssige Trägermedium kann rein organisch, organisch-wässrig oder im wesentlichen rein wässrig sein. Bei den organischen Medien handelt es sich oft um solche auf der Basis von Kohlenwasserstoffen, Alkoholen und schwefelhaltigen Verbindungen, wie geschwefelten Terpenkohlenwasserstoffen und Terpenalkoholen sowie geschwefelten natürlichen Harzen. Die Zusammensetzung von Glanzedelmetallpräparaten und deren Verwendung zur Herstellung von glänzenden bis matten edelmetallhaltigen Filmen auf einem silikatischen Substrat, wobei die Dekorherstellung einen Brand bei einer Temperatur im Bereich von etwa 500 bis 1400 °C umfaßt, ist aus zahlreichen Dokumenten bekannt.

In der DE-PS 24 35 859 wird eine goldhaltige Überzugsmasse zum Einbrennen auf keramischen Gegenständen bei Temperaturen von 1100 bis 1400 °C gelehrt, welche neben einem Goldpräparat 3 bis 40 Gew.-% eines oder mehrerer Unedelmetalle und/oder eines oder mehrerer zusätzlicher Edelmetalle mit einem Schmelzpunkt über 1400 °C in Pulverform und bis zu 10 Gew.-% eines Haftoxides oder Glasflusses enthält. Die Überzugsmasse, welche besser als Poliergoldpräparat zu bezeichnen ist, kann neben metallischem Gold zusätzlich organische und/oder anorganische Goldverbindungen enthalten. Wesentliche Bestandteile des Präparats sind in dem organischen Trägermedium unlöslich, nämlich elementares Gold, die Unedelmetalle sowie die Haftoxide bzw. Glasflüsse. Der Goldgehalt derartiger Überzugsmassen liegt deutlich über jenen wie er für Glanzgoldpräparate üblich ist und zudem werden keine hochglänzenden Dekore erhalten. Die Unedelmetallkomponente umfaßt Mg, Si, Ti, Mn, Fe, Ni, Zn, Zr und/oder Sb. Bei den Haftoxiden handelt es sich um Verbindungen von B, Al, V, Cr, Sn, Bi und Ce. Kobalt bzw. Kobaltverbindungen werden nicht als Bestandteil der Unedelmetallkomponenten und Haftoxide genannt.

Die DE-PS 22 08 915 lehrt ein Polier- und Pudergoldpräparat, das zur Erhöhung der Einbrennbeständigkeit einen stabilisierenden Zusatz aus der Gruppe Cassius'scher Goldpurpur, Zinnoxid, Eisenoxid und Aluminiumoxid und als Flussmittel Bismutborat enthält. Das Präparat, mit welchem nur matte Dekore erhalten werden, enthält keine Chrom- und/oder Kobaltverbindung.

Die DE-PS 14 21 865 lehrt ein Verfahren zur Herstellung eines mit einem edelmetallhaltigen Film überzogenen glaskeramischen Gegenstands, wobei das zu verwendende Glanzedelmetallpräparat eine lösliche organische Edelmetallverbindung und 0,25 bis 10 Mol je Mol Edelmetall eines löslichen Flussmittels und einen organischen Träger für die Edelmetallverbindung und das Flussmittel enthält. Eingebrannt wird bei mindestens 900 °C. In diesem Dokument werden zahlreiche flusserzeugende Unedelmetalle genannt, darunter Aluminium, Bor, Bismut, Chrom, Kobalt, Indium, Silicium, Tantal, Titan und Zirkonium. Das ein Goldmercaptid und ein Titanat enthaltende Präparat des Beispiels 7 führt nicht zu einem hochglänzenden goldfarbenen Film, sondern zu einem dunkelgrauen Film. Auch die ein Goldmercaptid, Rhodiumresinat, Bismutresinat und Chromresinat sowie gegebenenfalls zusätzlich ein Tantalkoholat enthaltenden Präparate (siehe Spalten 9 und 10 der DE-AS 14 21 865) führen im allgemeinen zu matten Filmen, und nur in einem Fall (Masse d) wurde ein glänzender, jedoch dunkel gefärbter Film erhalten.

Bei dem Präparat des Beispiels 1 der DE-AS 14 21 865 auf der Basis eines Goldmercaptids, Niobalkohol und Kobaltresinat handelt es sich um ein typisches Poliergoldpräparat, das erst nach Polieren mit einer Glasfaserbürste einen seidenmatten, jedoch keinen glänzenden Goldfilm freilegt. Das Dokument lehrt zwar, dass das oder die flusserzeugenden Elemente in bestimmter Menge, bezogen auf Edelmetall, anwesend sein müssen, gibt jedoch keinen Hinweis darauf, dass eine Kombination von Kobalt und Chrom als flusserzeugende Elemente zu außergewöhnlichen Effekten führt.

Aus der DE-PS 38 09 541 ist bekannt, dass Glanzedelmetallpräparate, bestehend aus mindestens einer Organoedelmetallverbindung, einem organischen Träger und einem Flussmittel aus organischen Metallverbindungen, bei 1250 °C eingebrannt und zur Erzeugung spülmaschinenbeständiger Glanzedelmetalldekore auf Geschirrteilen aus silikatischen Werkstoffen verwendet werden können, wenn das Flussmittel organische Siliciumverbindungen mit 3 und/oder 4 hydrolysierbaren Gruppen am Siliciumatom in einer Menge von 0,1 bis 4 Mol Si pro Mol Edelmetall enthält. Durch die Anwesenheit einer siliciumorganischen Edelmetallverbindung in hoher Konzentration bildet sich beim Brand auf dem Edelmetallfilm ein durchsichtiger glasartiger Belag, der für die hohe mechanische Resistenz des Dekors verantwortlich ist, jedoch sind die Dekore sehr dunkel und häufig rötlich oder grünlich verfärbt und daher in ihrer Anwendung eingeschränkt. Das Dokument gibt keinen Hinweis darauf, zusätzlich eine Kobaltverbindung als Flussmittelbestandteil einzusetzen. Wird der Gehalt an Si-organischen Verbindungen im Flussmittel unter den anspruchsgemäßen Wert abgesenkt, werden zwar noch glänzende Dekorschichten erhalten, diese weisen jedoch eine schlechte Haftung auf dem keramischen Substrat auf.

Gemäß DE-PS 40 03 796 lassen sich mikrowellenbeständige, bei 1180 bis 1230 °C einbrennbare Edelmetalldekore, insbesondere Glanzgolddekore, erhalten, wenn man ein Glanzedelmetallpräparat verwendet, dessen Flussmittel eine organische Nickelverbindung enthält. Vorzugsweise enthält das Flussmittel zusätzlich eine lösliche organische Verbindung von Silicium, Aluminium, Chrom und Bismut. Derartige Präparate erfüllen jedoch nicht die an Glanzgolddekore gestellten Qualitätsanforderungen.

Auch die DE-PS 37 21 000 lehrt ein Edelmetallpräparat zur Herstellung eines mikrowellenbeständigen Dekors: Dieses enthält einen Edelmetall-Gehalt von 60 bis 90 Gew.-% und einen Unedelmetall-Gehalt von 10 bis 40 Gew.-%, jeweils bezogen auf den Gesamt-Metallgehalt des Präparats. Unter den Unedelmetallen, welche in Form eines Resinats und/oder Sulforesinats eingesetzt werden, sind genannt: Al, Sb, Ba, Bi, B, Ca, Ce, Cr, Co, Si, Ge, Ta, Sn, Ti, Zn und Zr. Das Goldpräparat gemäß den Beispielen dieses Dokuments wird bei 800 °C, das Poliergoldpräparat bei 1250 °C eingebrannt. Es gibt keinen Hinweis, wonach das Glanzgoldpräparat bei einer Temperatur oberhalb des Schmelzpunktes von Gold einbrennfähig ist. Das Dokument vermittelt auch keinen Hinweis, wonach es zweckmäßig ist, Kobalt und Chrom als Flussmittel gemeinsam in bestimmter Menge einzusetzen, um zu einem Glanzedelmetallpräparat für den Hochtemperaturbrand zu gelangen.

Edelmetallpräprate gemäß US 4,418,099 , welche als Flussmittelkomponente metallorganische Verbindungen von Elementen der Gruppen 4a und b, 5a und b sowie 6b des Periodensystems und zusätzlich ein nicht-metallisches Lüsterpigment, wie Glimmer, enthalten, führen unter üblichen Brennbedingungen (450 bis 900 °C) zu seidenmatten Edelmetalldekoren mit Poliergoldcharakter. Hinweise, wonach durch den Einsatz sowohl einer Chrom- als auch einer Kobaltverbindung als Flussmittelkomponente das Präparat bei höherer Temperatur eingebrannt werden könnte, lassen sich diesem Dokument nicht entnehmen.

Aufgabe der vorliegenden Erfindung ist demgemäß, ein Glanzedelmetallpräparat, insbesondere Glanzgoldpräparat, bereitzustellen, das bei einer Temperatur oberhalb des Schmelzpunktes von Gold bzw. oberhalb des Schmelzpunktes einer Gold als Hauptkomponente enthaltenden Legierung eingebrannt werden kann und hierbei metallisch glänzende Dekore mit der natürlichen Farbe des Edelmetalls oder der Edelmetalllegierung ergibt.

Es wurde gefunden, dass diese Aufgabe sich überraschenderweise dadurch lösen lässt, dass das Flussmittel des Edelmetallpräparats sowohl eine Chrom- als auch eine Kobaltverbindung in bestimmtem Verhältnis zueinander enthält.

Gegenstand der Erfindung ist demgemäß ein Glanzedelmetallpräparat zur Herstellung von bei 1050 bis 1300 °C eingebrannten Glanzedelmetalldekoren, umfassend eine oder mehrere organische Edelmetallverbindungen, in einer Menge entsprechend 6 bis 16 Gew.-% Edelmetalle, ein Flussmittel aus mindestens zwei Unedelmetallverbindungen und ein organisches oder organisch-wässriges oder im wesentlichen wässriges Trägermedium, in welchem die Edelmetall- und Unedelmetallverbindungen im wesentlichen gelöst sind, das dadurch gekennzeichnet ist, dass das Flussmittel eine Chromverbindung in einer Menge von 0,3 bis 1,0 Gew.-%, berechnet als Cr₂O₃, und eine Kobaltverbindung in einer Menge von 0,2 bis 0,7 Gew.-%, berechnet als CoO, enthält, wobei das Gewichtsverhältnis Cr₂O₃ zu CoO im Bereich von 1,0 bis 2,3 liegt.

Die Unteransprüche richten sich auf bevorzugte Ausführungsformen. Durch die Anwesenheit der erfindungsgemäßen Kombination von Flussmittelbestandteilen wird ein Zusammenlaufen des geschmolzenen Edelmetalls, bei welchem es sich im wesentlichen um Gold oder Goldlegierungen handelt, zu großen Tropfen auf der Oberfläche des zu dekorierenden Substrats verhindert. Gleichzeitig wird ein Herausdiffundieren von Glasuroxiden auf die Oberfläche des erhaltenen Edelmetallfilms weitgehend verhindert. Soweit erforderlich, genügt im allgemeinen ein einfaches Abwischen des eingebrannten Dekors mit z. B. einem feuchten Tuch oder mildes Polieren mit z. B. einer Glasfaserbürste, um den Glanzfilm vollständig freizulegen.

Die Glanzedelmetallpräparate enthalten eine oder mehrere lösliche Verbindungen der Edelmetalle aus der Reihe Gold, Silber, Ruthenium, Rhodium, Palladium, Osmium, Iridium und Platin. Bevorzugt enthalten die Präparate als Hauptkomponente eine oder mehrere Verbindungen von Gold sowie zur Modifizierung der Farbe und Eigenschaften eine oder mehrere lösliche Verbindungen der Elemente Silber, Rhodium, Palladium und Platin. Der Edelmetallgehalt des Präparats liegt im Bereich von 6 bis 16 Gew.-% Edelmetalle, bezogen auf das Präparat, vorzugsweise im Bereich von 8 bis 15 Gew.-% und besonders bevorzugt im Bereich von 9 bis 12 Gew.-%.

Bei den in den erfindungsgemäßen Glanzedelmetallpräparaten enthaltenen Edelmetallverbindungen handelt es sich um organische Verbindungen, welche in dem anwesenden organischen, organisch-wässrigen oder im wesentlichen wässrigen Medium löslich sind. Bei den organischen Edelmetallverbindungen handelt es sich insbesondere um solche, in welchen das Edelmetall über eine Schwefel- oder Sauerstoffbrücke an ein organisches Gerüst gebunden ist. Insbesondere handelt es sich um sogenannte Sulforesinate, welche aus der Umsetzung einer Goldverbindung mit einer geschwefelten harzartigen Verbindung resultieren, sowie um Thioester und insbesondere um Thiolate auf der Basis aliphatischer, cycloaliphatischer und aromatischer Mercaptane. Sofern das Edelmetallpräparat ein wässriges oder organisch-wässriges Medium enthält, weist die organische Edelmetallverbindung zusätzlich löslichmachende Gruppen aus der Reihe -COOH-, -SO₃H, -OH, -CONH₂, -NH₂ und -OP(O)(OH)₂ auf. In einem organischen Trägermedium lösliche organische Edelmetallverbindungen sind der Fachwelt allgemein bekannt, beispielhaft wird auf die eingangs zitierten Dokumente verwiesen. In einem wässrig-organischen Trägermedium lösliche Goldverbindungen sind aus der EP-B 0 514 073 und EP-B 0 668 265 bekannt.

Außer den organischen Edelmetallverbindungen enthält das erfindungsgemäße Präparat mindestens zwei oder mehr organische oder/und anorganische Unedelmetallverbindungen, welche im Präparat löslich sind und unter den Brennbedingungen das entsprechende Elementoxid bilden. Die Auswahl des organischen oder anorganischen Rests dieser Unedelmetallverbindungen kann frei erfolgen, solange die Verbindung in dem gewählten Trägermedium homogen löslich ist und die Verbindung beim Ausbrand rückstandsfrei unter Bildung des Elementoxids zersetzlich ist. Ähnlich wie bei den Edelmetallverbindungen kann es sich hierbei um niedermolekulare Alkoholate und Thiolate sowie um sogenannte Resinate und Sulforesinate handeln. Etliche Flusselemente, darunter Kobalt und Chrom, können auch in der Form von Salzen aliphatischer oder aromatischer Carbonsäuren, wie Ethylhexanoate oder Octanoate, oder Komplexen mit aliphatischen Diketonen, wie beispielsweise Pentandionate oder Mischungen dieser Verbindungen eingesetzt werden. Anorganische Flussmittel können in Präparaten mit einem wässrigen oder wässrig-organischen Medium eingesetzt werden. Erfindungswesentlich ist, dass das Flussmittel sowohl eine Kobaltverbindung als auch zusätzlich eine Chromverbindung enthält.

Das Glanzedelmetallpräparat enthält mindestens eine Chromverbindung in einer Menge von 0,3 bis 1 Gew.-%, vorzugsweise 0,4 bis 0,9 Gew.-%, jeweils berechnet als Cr₂O₃, und mindestens eine Kobaltverbindung in einer Menge von 0,2 bis 0,7 Gew.-%, vorzugsweise 0,25 bis 0,6 Gew.-%, jeweils berechnet als CoO. Erfindungswesentlich ist, dass die Chrom- und Kobaltverbindungen in einem Gewichtsverhältnis Cr₂O₃ zu CoO im Bereich von 1,0 bis 2,3 , vorzugsweise im Bereich von 1,4 bis 1,8 enthalten sind. In wasserfreien oder wasserarmen Präparaten werden bevorzugt organische Co- und Cr-Verbindungen eingesetzt. Die Bedeutung der Gegenwart der beiden Flussmittelbestandteile und deren Verhältnis folgt aus den beispielhaften Ausführungen.

Zusätzlich zu der erfindungsgemäß erforderlichen Kobaltund Chromverbindung im Flussmittel kann dieses eine oder mehrere weitere organische und/oder anorganische Unedelmetallverbindungen von Metallen der Gruppen 3a und b, 4a und b, 5a und b, 6b, 7b, 8b, 1b und 2b enthalten. Bevorzugte Glanzedelmetallpräparate enthalten als zusätzliche Flussmittelkomponente eine oder mehrere Verbindungen aus der Reihe Bor und Aluminium; Indium; Scandium, Yttrium, Lanthan, Cer; Silicium, Germanium und Zinn; Titan und Zirkonium; Bismut; Vanadium, Niob und Tantal; Eisen und Kupfer. Obgleich Rhodium zu den Edelmetallen zählt, üben Rhodiumverbindungen eine Flussmittelwirkung aus.

Gemäß einer besonders bevorzugten Ausführungsform enthält das Flussmittel außer einer Chrom und einer Kobaltverbindung zusätzlich eine organische Titanverbindung, beispielsweise ein Alkoxytitanat. Die Titanverbindung ist vorzugsweise in einer Menge von 0,4 bis 1,5 Gew.-%, berechnet als TiO₂, im Glanzedelmetallpräparat enthalten. Auch der zusätzliche Einsatz einer organischen Indiumverbindung in einer Menge von 0 bis 0,8 Gew.-%, berechnet als In₂O₃, hat sich als vorteilhaft erwiesen. Gemäß einer weiteren Ausführungsform des erfindungsgemäßen Edelmetallpräparats enthält dieses als zusätzliche Flussmittelkomponenten eine organische Bor- und/oder organische Siliciumverbindung. Der Einsatz der letztgenannten Flussmittelbestandteile ermöglicht die Ausbildung einer dünnen transparenten Glasschicht auf der Edelmetallschicht, wodurch die mechanische Beständigkeit des Dekors erhöht wird.

Obgleich das erfindungsgemäße Glanzedelmetallpräparat die Chrom- und Kobaltverbindung in einer Gesamtmenge von mindestens 0,5 Gew.-%, berechnet als Cr₂O₃ + CoO, enthält, ist es vorteilhaft, den Flussmittelgehalt weiter zu erhöhen, so daß die Gesamtmenge an Flussmitteln vorzugsweise mindestens 1 bis 5 Gew.-%, vorzugsweise 1,5 bis 3,5 Gew.-%, berechnet als Summe der Unedelmetalloxide beträgt. Erfindungsgemäße Glanzedelmetallpräparate, dessen Flussmittel auch eine Titanverbindung enthält, enthalten letztere vorzugsweise in einer Menge von 0,5 bis 2 Gew.-%, berechnet als TiO₂. Bevorzugt eingesetzte organische Titanverbindungen sind Titanalkoholate, insbesondere Tetraalkoxytitanate und Ti-salze von Carbonsäuren.

Als Trägermedien kommen solche in Betracht, wie sie in vorbekannten Glanzgoldpräparaten mit einem organischen oder organisch-wässrigen Medium bekannt sind. Üblicherweise umfasst das Trägermedium sowohl ein organisches Bindemittel als auch ein organisches, organisch-wässriges oder im wesentlichen rein wässriges Lösungsmittel. Die Zusammensetzung des Trägermediums sowie die Einsatzmenge desselben werden so ausgewählt, dass die organischen Edelmetallverbindungen und organischen Unedelmetallverbindungen darin klar löslich sind und das Präparat eine für die gewählte Anwendungsart geeignete Viskosität und gute Filmeigenschaften des getrockneten, aber noch nicht eingebrannten Films, aufweist. Vorzugsweise bilden die organischen Edelmetallverbindungen und organischen Unedelmetallverbindungen nach dem Trocknen noch ein homogenes System bzw. eine Lösung. Das oder die anwesenden Bindemittel sollen möglichst klar in dem anwesenden Lösungsmittel oder Lösungsmittelgemisch gelöst sein. Bekannte Bindemittel für Glanzedelmetallpräparate sind Polyacryl- und Polymethacrylharze, Polyvinylpyrolidon, Celluloseether, wie Hydroxyalkyl-, Alkoxy- und Carboxyalkylcellulose, Polyamide, Polyalkylenglykole, wie Polyethylenglykol, Polyester, Polyacrylamide, Polyvinylacetat, Polyvinylalkohol, Alkydharze, Polyamine, Polyurethanharze, Kohlenwasserstoffharze sowie natürliche Harze und geschwefelte natürliche Harze, wie geschwefeltes Damarharz. Erfindungsgemäße Glanzedelmetallpräparate, welche wasserlösliche Glanzedelmetallverbindungen und Unedelmetallverbindungen enthalten, enthalten als Bindemittelkomponente zweckmäßigerweise ein Harz oder ein Harzgemisch, das zusätzlich wasserlöslichmachende Gruppen enthält.

Glanzedelmetallpräparate mit einem im wesentlichen organischen Trägermedium enthalten im allgemeinen 10 bis 40 Gew.-% eines oder mehrerer organischer Lösungsmittel. Geeignet sind aliphatische, cycloaliphatische und aromatische Kohlenwasserstoffe, insbesondere alkylierte Aromaten, und Terpenkohlenwasserstoffe, Ketone, Alkohole und Ether; gut geeignet sind auch ätherische Öle.

Wirksame Bindemittelbestandteile sind auch Maleinsäure, modifizierte Kolophoniumharze sowie kolophoniummodifizierte Phenolharze. Als Bindemittel sind auch Wachse aus der Reihe der Fettalkohole, Fettamide, Polyolefinwachse und Polyalkylenglykole geeignet. Üblicherweise enthalten nichtwässrige Glanzedelmetallpräparate ein organisches Trägermedium, enthaltend ein oder mehrere Bindemittel und ein oder mehrere organische Lösungsmittel in einer Gesamtmenge von etwa 20 bis 60 Gew.-%, bezogen auf das Präparat.

Die Glanzedelmetallpräparate lassen sich in üblicher Weise herstellen durch Homogenisieren der organischen Edelmetallverbindungen, Flussmittelverbindungen sowie des Lösungsmittel und/oder Bindemittel enthaltenden Trägermediums. Die Herstellung kann zusätzlich einen Schwefelungsschritt umfassen, wobei ungesättigte Bindemittel und/oder Lösungsmittel sowie gegebenenfalls Edelmetallverbindungen über Schwefelbrücken vernetzt werden. Applikation und Brennbedingungen folgen.

Die Glanzedelmetallpräparate lassen sich in an sich bekannter Weise, wie mittels Direkt- oder Indirektdruck, durch Pinselauftrag oder Rändermaschinen auf das zu dekorierende Substrat auftragen. Die Nassschichtdicke beträgt im allgemeinen 10 bis 40 µm. Nach dem Trocknen wird das Dekor bei 1050 bis 1300 °C eingebrannt. Der günstigste Brennbereich für Glanzgoldpräparate ist 1100 bis 1230 °C. Oberhalb dieser Brenntemperatur bildet sich zunehmend eine rosafarbene Oxidschicht auf dem Dekor. Unterhalb 1100 °C brennt das Präparat ebenfalls glänzend aus, jedoch wird der erhaltene Farbton mit abnehmender Temperatur dunkler. Die optische Erscheinung der so erzeugten Edelmetalldekoration ist ohne Polieren glänzend. In einzelnen Fällen ist die Dekorschicht von einem dünnen Belag überzogen, welcher sich aber in einfacher Weise - Abreiben mit einem feuchten Tuch oder einer Glasfaserbürste - entfernen lässt und damit zu einem brillanten Glanz führt. Die Kratzfestigkeit, chemische Resistenz und Spülmaschinenbeständigkeit der erfindungsgemäß erzeugten Dekore entspricht Dekoren, wie sie unter Normalbrandbedingungen (450 bis 900 °C) erhältlich sind.

Die erfindungsgemäßen Glanzedelmetallpräparate ergeben nicht nur eine schöne Edelmetallfarbe, einen hohen Glanz und eine gute Haftung, sondern es ist auch möglich, das Glanzedelmetallpräparat gleichzeitig mit Inglasurfarben einzubrennen, so daß anstelle von zwei Dekorbränden nur ein Dekorbrand nötig ist. Die erfindungsgemäßen Glanzedelmetallpräparate lassen sich auch in Poliergoldpräparaten einsetzen.

Die nachfolgenden Beispiele und Vergleichsbeispiele verdeutlichen die Erfindung.

### Beispiele und Vergleichsbeispiele

Präparate der nachfolgenden Zusammensetzung wurden in üblicher Weise hergestellt und auf Hartporzellan mit dem Pinsel aufgetragen und. Zum Brand wurde in ca. 60 Min. auf 1200 °C aufgeheizt und dann innerhalb 60 Min. abgekühlt.

Eingesetzt wurden Goldsulforesinate mit einem Au-Gehalt von ca. 30 bzw. 40 Gew.-%. Die Cr-haltige Flussmittelverbindung war Chromhexanoat, und entsprach 10 Gew.-% Cr₂O₃; die Cohaltige Verbindung war ein Ethylhexanoat mit 10 Gew.-% CoO; die Ti-haltige Verbindung war oligomeres Butyltitanat mit 17 Gew.-% TiO₂; die In-haltige Verbindung war ein Acetylacetonat mit 7,66 Gew.-% In₂O₃; die Si-haltige Verbindung war Trimethoxydecyloxysilan mit 20 Gew.-% SiO₂; die B-haltige Verbindung war ein Borsäureester von Methylcyclohexanol mit 10 % B₂O₃. Bei dem Präparat auf der Basis von Fe₂O₃ handelte es sich um ein Benzoat, bei CuO um ein Ethylhexanoat/Naphthenat, bei SnO₂ um ein Benzoat/Naphthenat, bei CaO und MoO₃ um ein Methylhexanoat, bei ZrO₂ um ein Zirkonat, bei RuO₂ um ein Sulforesinat mit dem jeweils angegebenen Metalloxidgehalt.

### Beispiel 1

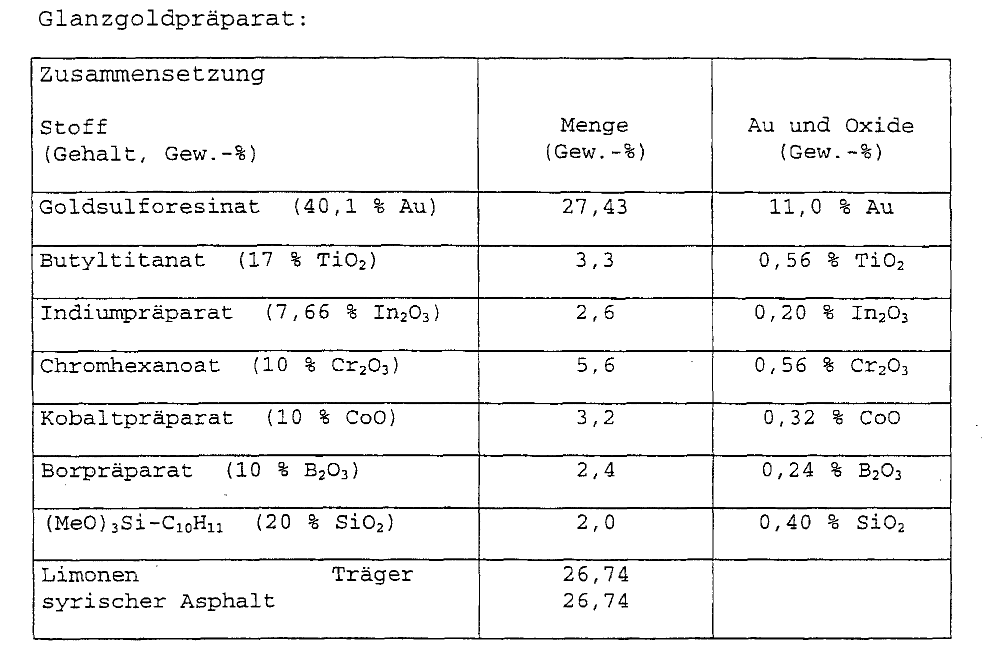

Gewichtsverhältnis: Cr₂O₃ / CoO = 1,75
Gewichtsverhältnis: Flussmitteloxide / Au = 0,20

Das bei 1200 °C eingebrannte Dekor war glänzend, zeigte einen goldgelben Farbton und gute Haftung.

### Beispiel 2

| Stoff (Gehalt, Gew.-%) | Menge (Gew.-%) | Au und Oxide (Gew.-%) |
|---|---|---|
| Goldsulforesinat (29,86 % Au) | 29,48 | 8,8 % Au |
| Butyltitanat (17 %) | 2,84 | 0,48 % TiO₂ |
| Indiumpräparat (7,66 %) | 5,2 | 0,32 % In₂O₃ |
| Chromhexanoat (10 %) | 5,6 | 0,56 % Cr₂O₃ |
| Kobaltpräparat (10 %) | 4,0 | 0,4 % CoO |
| Borpräparat (10 %) | 1,6 | 0,16 % B₂O₃ |
| SD-Dicköl (geschwefeltes Dammarharz) | 25,64 | |
| ST-Balsam (geschwefeltes Terpentinöl) | 25,64 | |

Gewichtsverhältnis: Cr₂O₃ / CoO = 1,70
Gewichtsverhältnis: Flussmitteloxide / Au = 0,217

Das bei 1200 °C eingebrannte Dekor war goldfarben und glänzend.

### Vergleichsbeispiele VB 1 bis VB 6

Die Bedeutung der Zugabe einer Co-organischen Verbindung wird anhand der Vergleichsbeispiele VB 1 bis VB 4 deutlich. Diese Präparate sind in ihrer Zusammensetzung und der Gesamtflussmenge gleich zu Beispiel 1, jedoch wurde anstatt der Co-organischen Verbindung eine andere Unedelmetallverbindung zugegeben. VB 5 und VB 6 zeigen, dass eine Co-Verbindung allein, also ohne Cr-Verbindung, keine guten Präparate ergibt.

### Vergleichsbeispiel 1

| Stoff | Menge (Gew.-%) | Au und Oxide (Gew.-%) |
|---|---|---|
| Goldsulforesinat (40,11 % Au) | 27,43 | 11,0 % Au |
| Butyltitanat | 3,3 | 0,56 % TiO₂ |
| Indiumpräparat | 4,0 | 0,14 % In₂O₃ |
| Chromhexanoat | 5,6 | 0,56 % Cr₂O₃ |
| Eisenpräparat (17 % Fe₂O₃) | 1,75 | 0,30 % Fe₂O₃ |
| Borpräparat | 2,4 | 0,24 % B₂O₃ |
| Trimethoxydecylsilan | 2,0 | 0,4 % SiO₂ |
| Limonen syrischer Asphalt | 26,76 | |
| | 26,76 | |

### Vergleichsbeispiel 2

| Stoff | Menge (Gew.-%) | Au und Oxide (Gew.-%) |
|---|---|---|
| Goldsulforesinat (40,11 % Au) | 27,43 | 11,0 % Au |
| Butyltitanat (17 % TiO₂) | 3,3 | 0,56 % TiO₂ |
| Indiumpräparat (3,47 % In₂O₃) | 4,0 | 0,14 % In₂O₃ |
| Chromhexanoat (10 % Cr₂O₃) | 5,6 | 0,56 % Cr₂O₃ |
| Kupferpräparat (10 % CuO) | 3,0 | 0,30 % CuO |
| Borpräparat (10 % B₂O₃) | 2,4 | 0,24 % B₂O₃ |
| Trimethoxydecylsilan | 2,0 | 0,4 % SiO₂ |
| Limonen syrischer Asphalt | 26,14 | |
| | 26,14 | |

### Vergleichsbeispiel 3

| Stoff | Menge (Gew.-%) | Au und Oxide (Gew.-%) |
|---|---|---|
| Goldsulforesinat (40,11 % Au) | 27,43 | 11,0 % Au |
| Butyltitanat (17 % TiO₂) | 3,3 | 0,56 % TiO₂ |
| Indiumpräparat (3,47 % In₂O₃) | 4,0 | 0,14 % In₂O₃ |
| Chromhexanoat (10 % Cr₂O₃) | 5,6 | 0,56 % Cr₂O₃ |
| Zinnpräparat (10 % SnO) | 3,0 | 0,30 % SnO |
| Borpräparat (10 % B₂O₃) | 2,4 | 0,24 % B₂O₃ |
| Trimethoxydecylsilan | 2,0 | 0,4 % SiO₂ |
| Limonen syrischer Asphalt | 26,14 | |
| | 26,14 | |

### Vergleichsbeispiel 4

| Stoff | Menge (Gew.-%) | Au und Oxide (Gew.-%) |
|---|---|---|
| Goldsulforesinat (40,11 % Au) | 27,43 | 11,0 % Au |
| Butyltitanat (17 % TiO₂) | 3,3 | 0,56 % TiO₂ |
| Indiumpräparat (3,47 % In₂O₃) | 4,0 | 0,14 % In₂O₃ |
| Chromhexanoat (10 % Cr₂O₃) | 5,6 | 0,56 % Cr₂O₃ |
| Calciumethylhexanoat (16,31 % CaO) | 1,85 | 0,30 % SnO |
| Borpräparat (10 % B₂O₃) | 2,4 | 0,24 % B₂O₃ |
| Trimethoxydecylsilan | 2,0 | 0,4 % SiO₂ |
| Limonen syrischer Asphalt | 26,71 | |
| | 26,71 | |

Die Präparate der Vergleichsbeispiele VB 1 bis VB 4 wurden mit dem Pinsel auf einen Porzellanteller aufgetragen und bei 1200 °C gebrannt. Das auf dem Teller erzeugte Dekor war in allen Beispielen matt und mit einem rosafarbenen oder ockerfarbenen Oxidbelag überzogen. Durch vorsichtiges Polieren mit einer Glasfaserbürste ließ sich zwar eine unter der Oxidschicht liegende Goldschicht freilegen, welche jedoch eine nur sehr geringe Haftung auf dem Substrat zeigte und schon beim Vorgang des Polierens zum größten Teil entfernt wurde. Die Präparate der Vergleichsbeispiele VB 1 bis VB 4 sind somit als Präparate zur Dekoration keramischer Artikel nicht brauchbar.

### Vergleichsbeispiel 5

VB 5 ist in der Zusammensetzung der Unedelmetallkomponenten identisch zu Beispiel 1, jedoch wurde keine chromorganische Verbindung zugegeben.

| Stoff | Menge (Gew.-%) | Au und Oxide (Gew.-%) |
|---|---|---|
| Goldsulforesinat (40,11 % Au) | 27,43 | 11,0 % Au |
| Butyltitanat (17 % TiO₂) | 3,3 | 0,56 % TiO₂ |
| Indiumpräparat (7,66 % In₂O₃) | 2,6 | 0,2 % In₂O₃ |
| Cobaltpräparat (10 % CoO) | 3,2 | 0,32 % CoO |
| Borpräparat (10 % B₂O₃) | 2,4 | 0,24 % B₂O₃ |
| Trimethoxydecylsilan | 2,0 | 0,4 % SiO₂ |
| Limonen syrischer Asphalt | 19,69 | |
| | 39,38 | |

Gesamtunedelmetalloxide / Au = 0,156

Ein Ausbrand dieses Präparats auf einem keramischen Substrat bei 1200 °C ergibt eine Golddekoration, die von einer starken rosafarbenen Oxidschicht überzogen ist und eine nur geringe Haftung auf dem Substrat aufweist.

Wie schon zuvor dargestellt, ist jedoch die Zugabe einer Co-organischen Verbindung als Unedelmetallkomponente nicht die alleinige Vorraussetzung zum Erhalt einer brauchbaren Golddekoration. Vielmehr muß die Cobaltverbindung zusammen mit einer chromorganischen Verbindung eingesetzt werden.

### Vergleichsbeispiel VB 6

Im Vergleichsbeispielpräparat VB 6 wurde die Cr-organische Verbindung durch eine Verbindung des gruppenhomologen Molybdäns ersetzt.

| Stoff | Menge (Gew.-%) | Au und Oxide (Gew.-%) |
|---|---|---|
| Goldsulforesinat (29,86 % Au) | 33,5 | 10,0 % Au |
| Butyltitanat (17 % TiO₂) | 2,9 | 0,50 % TiO₂ |
| Indiumpräparat (7,66 % In₂O₃) | 3,9 | 0,3 % In₂O₃ |
| Cobaltpräparat (10 % CoO) | 5,0 | 0,5 % CoO |
| Borpräparat (10 % B₂O₃) | 3,0 | 0,3 % B₂O₃ |
| Molybdänpräparat (10 % Mo₂O₃) | 7,0 | 0,7 % Mo₂O₃ |
| Eukalyptusöl | 44,7 | |

Gesamtunedelmetalloxide / Au = 0,23

Der Ausbrand dieses Präparats auf einem keramischen Substrat bei 1200 °C ergibt eine rosafarbene Oxidschicht ohne Goldglanz.

### Beispiele B3 bis B10 und Vergleichsbeispiele VB 7 bis VB 9

Der folgenden Tabelle sind weitere erfindungsgemäße und nicht-erfindungsgemäße Zusammensetzungen und Dekoreigenschaften nach einem Brand bei 1200 °C zu entnehmen. Eingesetzt wurden übliche Präparate. Die Tabelle enthält die Gold- und Flussmittelmenge, berechnet als Au- bzw. Unedelmetalloxid.

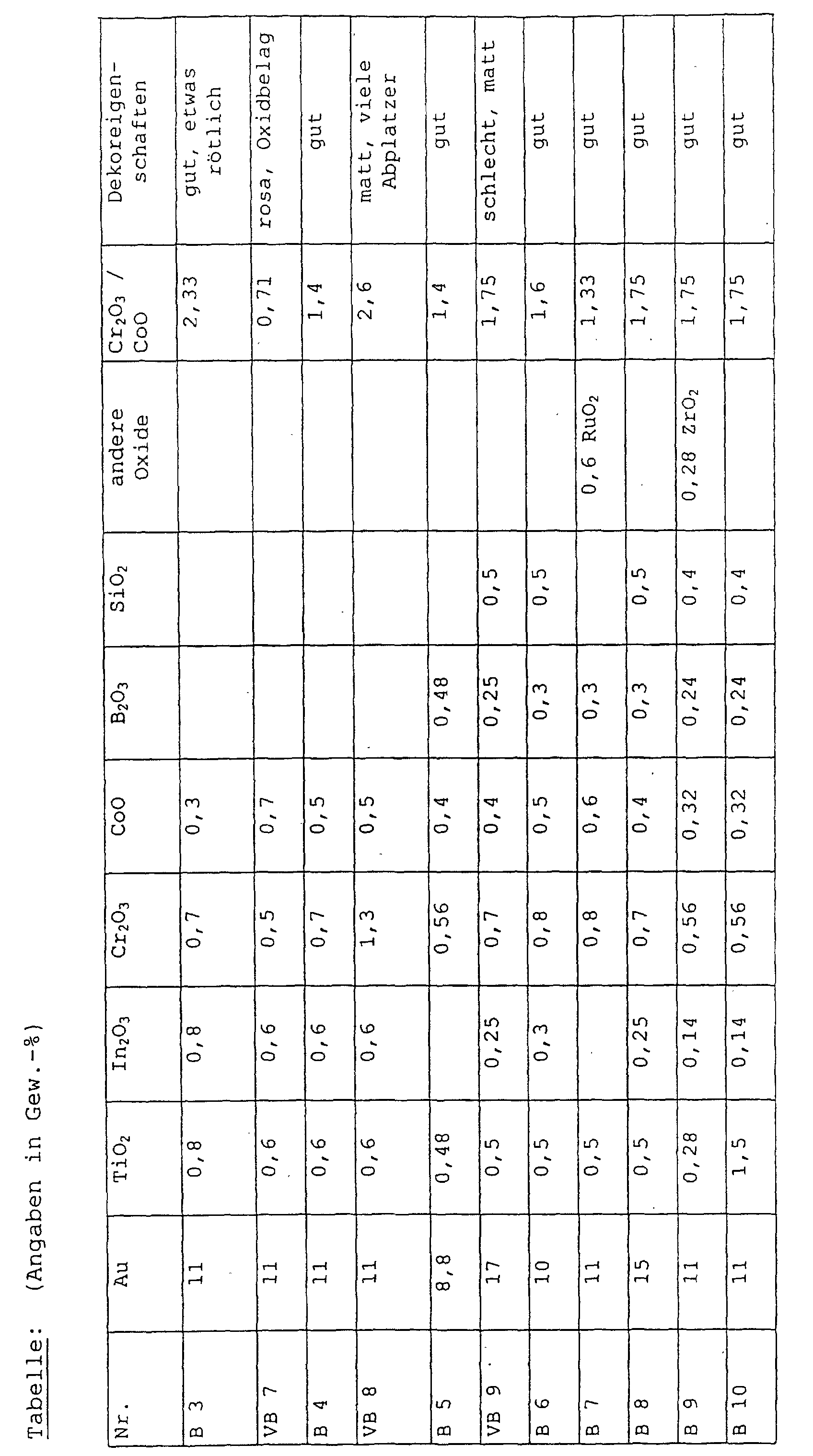

## Patentansprüche

1. Glanzedelmetallpräparat zur Herstellung von bei 1050 bis 1300 °C eingebrannten Glanzedelmetalldekoren, umfassend eine oder mehrere organische Edelmetallverbindungen, in einer Menge entsprechend 6 bis 16 Gew.-% Edelmetalle, ein Flussmittel aus mindestens zwei Unedelmetallverbindungen und ein organisches oder organisch-wässriges oder im wesentlichen wässriges Trägermedium, in welchem die Edelmetall- und Unedelmetallverbindungen im wesentlichen gelöst sind,
**dadurch gekennzeichnet,**
**dass** das Flussmittel eine Chromverbindung in einer Menge von 0,3 bis 1,0 Gew.-%, berechnet als Cr₂O₃, und eine Kobaltverbindung in einer Menge von 0,2 bis 0,7 Gew.-%, berechnet als CoO, enthält, wobei das Gewichtsverhältnis Cr₂O₃ zu CoO im Bereich von 1,0 bis 2,3 liegt.

2. Glanzedelmetallpräparat nach Anspruch 1,
**dadurch gekennzeichnet,**
**dass** es mindestens eine organische Goldverbindung in einer Menge entsprechend 8 bis 15 Gew.-% Gold, eine organische Chromverbindung in einer Menge von 0,4 bis 0,9 Gew.-%, berechnet als Cr₂O₃, und eine organische Kobaltverbindung in einer Menge von 0,25 bis 0,6 Gew.-%, berechnet als CoO, enthält.

3. Glanzedelmetallpräparat nach Anspruch 1 oder 2,
**dadurch gekennzeichnet,**
**dass** es mindestens eine Chrom- und mindestens eine Kobaltverbindung in einer Menge entsprechend einem Gewichtsverhältnis Cr₂O₃ zu CoO im Bereich von 1,4 bis 1,8 enthält.

4. Glanzedelmetallpräparat gemäß einem der Ansprüche 1 bis 3,
**dadurch gekennzeichnet,**
**dass** das Flussmittel zusätzlich mindestens eine organische Unedelmetallverbindung aus der Reihe von Verbindungen der Elemente Bor, Aluminium; Indium; Scandium, Yttrium, Lanthan, Cer; Silicium, Germanium, Zinn; Titan, Zirkonium; Bismut; Vanadium, Niob, Tantal; Eisen und Kupfer enthält.

5. Glanzedelmetallpräparat gemäß einem der Ansprüche 1 bis 4,
**dadurch gekennzeichnet,**
**dass** das Flussmittel zusätzlich eine organische Titanverbindung in einer Menge von 0,4 bis 1,5 Gew.%, berechnet als TiO₂, und eine organische Indiumverbindung in einer Menge von 0 bis 0,8 Gew.-%, berechnet als In₂O₃, enthält.

6. Glanzedelmetallpräparat gemäß einem der Ansprüche 1 bis 5,
**dadurch gekennzeichnet,**
**dass** es organische Unedelmetallverbindungen in einer Gesamtmenge von 1,5 bis 3,5 Gew.-%, berechnet als Summe der Unedelmetalloxide, enthält.

7. Verfahren zur Herstellung eines Glanzedelmetalldekors, auf einem silikatischen Substrat, umfassend Auftragen eines Glanzedelmetallpräparats auf zumindestens Teilen der Oberfläche eines silikatischen Substrats und Einbrennen,
**dadurch gekennzeichnet,**
**dass** man ein Glanzedelmetallpräparat gemäß einem der Ansprüche 1 bis 6 aufträgt und bei einer Temperatur bei 1050 bis 1300 °C einbrennt.

8. Glanzedelmetallpräparat gemäß einem der Ansprüche 1 bis 6,
**dadurch gekennzeichnet,**
**dass** das Trägermedium im wesentlichen aus organischen Bestandteilen besteht.

9. Verfahren nach Anspruch 7,
**dadurch gekennzeichnet,**
**dass** man das Glanzedelmetallpräparat bei 1100 bis 1230 °C einbrennt.

## Claims

1. A bright noble metal preparation for the production of bright noble metal decorations which are fired on at 1050 to 1300°C, containing one or more organic noble metal compounds in an amount corresponding to 6 to 16 wt.% of noble metal, a flux of at least two base metal compounds and an organic or organic/aqueous or substantially aqueous carrier medium in which the noble metal and base metal compounds are substantially dissolved,
**characterised in that**
the flux contains a chromium compound in an amount of 0.3 to 1.0 wt.%, calculated as Cr₂O₃, and a cobalt compound in an amount of 0.2 to 0.7 wt.%, calculated as CoO, wherein the ratio by weight of Cr₂O₃ to CoO is within the range 1.0 to 2.3.

2. A bright noble metal preparation according to Claim 1,
**characterised in that**
it contains at least one organic gold compound in an amount corresponding to 8 to 15 wt.% of gold, an organic chromium compound in an amount of 0.4 to 0.9 wt.%, calculated as Cr₂O₃, and an organic cobalt compound in an amount of 0.25 to 0.6 wt.%, calculated as CoO.

3. A bright noble metal preparation according to Claim 1 or 2,
**characterised in that**
it contains at least one chromium compound and at least one cobalt compound in an amount corresponding to a ratio by weight of Cr₂O₃ to CoO within the range 1.4 to 1.8.

4. A bright noble metal preparation according to one of Claims 1 to 3,
**characterised in that**
the flux also contains at least one organic base metal compound from the set of compounds of the elements boron, aluminium; indium; scandium, yttrium, lanthanum, cerium; silicon, germanium, tin; titanium, zirconium; bismuth; vanadium, niobium, tantalum; iron and copper.

5. A bright noble metal preparation according to one of Claims 1 to 4,
**characterised in that**
the flux also contains an organic titanium compound in an amount of 0.4 to 1.5 wt.%, calculated as TiO₂, and an organic indium compound in an amount of 0 to 0.8 wt.%, calculated as In₂O₃.

6. A bright noble metal preparation according to one of Claims 1 to 5,
**characterised in that**
it contains organic base metal compounds in a total amount of 1.5 to 3.5 wt.%, calculated as the sum of the base metal oxides.

7. A process for preparing a bright noble metal decoration, on a siliceous substrate, comprising applying a bright noble metal preparation to at least parts of the surface of a siliceous substrate and firing on,
**characterised in that**
a bright noble metal preparation according to one of Claims 1 to 6 is applied and fired on at a temperature of 1050 to 1300°C.

8. A bright noble metal preparation according to one of Claims 1 to 6,
**characterised in that**
the carrier medium consists substantially of organic constituents.

9. A process according to Claim 7,
**characterised in that**
the bright noble metal preparation is fired on at 1100 to 1230°C.

## Revendications

1. Préparation de métal précieux brillant pour la fabrication de décors de métal précieux brillant cuits à une température allant de 1050°C à 1300°C, comprenant un ou plusieurs composés organiques de métaux précieux comprenant 6% à 16% en poids de métaux précieux, un fondant composé d'au moins deux composés de métaux non précieux et d'un milieu support organique ou organique-aqueux ou essentiellement aqueux, dans laquelle les composés de métaux précieux et non précieux sont essentiellement dissous, **caractérisée en ce que** le fondant contient un composé du chrome à raison de 0,3% à 1,0% en poids, exprimé en Cr₂O₃, et un composé du cobalt à raison de 0,2% à 0,7% en poids, exprimé en CoO, le rapport pondéral de Cr₂O₃ à CoO allant de 1,0 à 2,3.

2. Préparation de métal précieux brillant selon la revendication 1, **caractérisée en ce qu'**elle contient au moins un composé organique de l'or comprenant 8% à 15% d'or, un composé organique du chrome à raison de 0,4% à 0,9% en poids, exprimé en Cr₂O₃, et un composé organique du cobalt à raison de 0,25% à 0,6% en poids, exprimé en CoO.

3. Préparation de métal précieux brillant selon la revendication 1 ou 2, **caractérisée en ce qu'**elle contient au moins un composé du chrome et un composé du cobalt dans un rapport pondéral de Cr₂O₃ à CoO allant de 1,4 à 1,8.

4. Préparation de métal précieux brillant selon l'une quelconque des revendications 1 à 3, **caractérisée en ce que** le fondant contient en plus au moins un composé organique de métal non précieux de la série des composés des éléments suivants : le bore, l'aluminium ; l'indium ; le scandium, l'yttrium, le lanthane, le cérium ; le silicium, le germanium, le zinc ; le titane, le zirconium ; le bismuth ; le vanadium, le niobium, le tantale ; le fer et le cuivre.

5. Préparation de métal précieux brillant selon l'une quelconque des revendications 1 à 4, **caractérisée en ce que** le fondant contient en plus un composé organique du titane à raison de 0,4% à 1,5% en poids, exprimé en TiO₂, et un composé de l'indium à raison de 0% à 0,8% en poids, exprimé en In₂O₃.

6. Préparation de métal précieux brillant selon l'une quelconque des revendications 1 à 5, **caractérisée en ce qu'**elle contient un composé organique de métal non précieux à raison de 1,5% à 3,5% en poids, exprimé en somme des oxydes de métaux non précieux.

7. Procédé de préparation d'un décor de métal précieux brillant, sur un substrat de silicate, consistant à déposer une préparation de métal précieux brillant sur au moins des parties de la surface d'un substrat de silicate et à la cuire, **caractérisée en ce que** l'on dépose une préparation de métal précieux brillant selon l'une quelconque des revendications 1 à 6 et qu'on la cuit à une température allant de 1050°C à 1300°C.

8. Préparation de métal précieux brillant selon l'une quelconque des revendications 1 à 6, **caractérisée en ce que** le support est composé principalement de composants organiques.

9. Procédé selon la revendication 7, **caractérisé en ce que** l'on cuit la préparation de métal précieux brillant à une température allant de 1100°C à 1230°C.
